Europäisches Patentamt

European Patent Office

Office européen des brevets

(19)

(11) Veröffentlichungsnummer: **0 121 941**
**B1**

# (12) EUROPÄISCHE PATENTSCHRIFT

(45) Veröffentlichungstag der Patentschrift:
15.07.87

(51) Int. Cl.⁴: **C 03 B 23/04**

(21) Anmeldenummer: **84104069.4**

(22) Anmeldetag: **11.04.84**

(54) **Verfahren und Einrichtung zur Herstellung eines transversal gesickten oder gerippten inneren Rohres einer doppelwandigen Spezial-Gasentladungsröhre hoher Winkelselektivität.**

(30) Priorität: **11.04.83 DD 249730**

(43) Veröffentlichungstag der Anmeldung:
**17.10.84 Patentblatt 84/42**

(45) Bekanntmachung des Hinweises auf die Patenterteilung:
**15.07.87 Patentblatt 87/29**

(84) Benannte Vertragsstaaten:
**CH DE LI NL**

(56) Entgegenhaltungen:
**FR - A - 2 418 207**

(73) Patentinhaber: **VEB Kombinat Feinmechanische Werke Halle, Rudolf-Breitscheid-Strasse 71, DDR-4020 Halle (DD)**

(72) Erfinder: **Nolte, Lothar, Dipl.-Phys., Pfälzer Strasse 7, Jena (DD)**
Erfinder: **Roselt, Udo, Kurt-Sier-Strasse 1, Lobeda-Ost (DD)**
Erfinder: **Pöhler, Manfred, Dr. Dipl.-Phys., Block 213/8, Halle-Neustadt (DD)**

(74) Vertreter: **Spott, Gottfried, Dr. et al, Patentanwälte Spott und Puschmann Sendlinger-Tor-Platz 11, D-8000 München 2 (DE)**

## Beschreibung

Die Erfindung betrifft ein Verfahren nebst zugehöriger Einrichtungen zur Herstellung eines transversal gerippten oder gesickten inneren Rohres einer doppelwandigen Spezialgasentladungsröhre hoher Winkelselektivität aus silikatischen Werkstoffen, vorzugsweise für $CO_2$-Laser mit maximaler Gasentladung hoher Verstärkung.

Der Einsatz silikatischer Werkstoffe für Gasentladungsröhren bei Gaslasern ist auf Grund vieler Vorteile dominierend. Wegen der hohen Anforderungen, die allgemein bei Gasentladungsröhren hinsichtlich der Genauigkeit und der definierten Formgebung gestellt werden, müssen zu ihrer Fertigung aus silikatischen Werkstoffen aufwendige, komplizierte und damit teure Fertigungs- und Umformverfahren angewandt werden. Bekannte Verfahren hierfür sind das Einblas- und Schleuderverfahren, das Umformpressverfahren sowie das KPG-Verfahren. Letzteres ermöglicht sogar Fertigungs- und Formtoleranzen, die im Bereich von hundertstel Millimeters liegen.

Da diese genannten Verfahren nur die Herstellung eng tolerierter, glattwandiger Glasrohre mit einem relativ kleinen Rohrdurchmesser gestatten, wurde auch schon vorgeschlagen, zur Herstellung einer masshaltigen und glatten inneren und äusseren Glasrohroberfläche bei Glasrohren mit relativ grossem Rohrdurchmesser und bei unterschiedlichen Wanddicken ein Verfahren anzuwenden, bei dem ein inneres und äusseres Kalibrierungswerkzeug gleichsinnig in Richtung der Glasrohrachse verschoben wird (FR-A-2 418 207), wobei die Kalibrierung in bekannter Weise bei der entsprechenden Verformungstemperatur des jeweils verwendeten Glaswerkstoffes erfolgt. Dabei werden sowohl das innere, wie auch das äussere Kalibrierungswerkzeug (vorzugsweise sogenannte Laufrollen) synchron kontinuierlich so in Richtung der Rohrachse verschoben, dass sie bezogen auf die Wandung des zu kalibrierenden Rohres eine spiralförmige Bewegungslinie beschreiben, wobei die Steigung der sich ergebenden Spirale offensichtlich so gewählt wird, dass sich die pro Umdrehung ergebenden Kalibrierungsflächen gegenseitig etwas überlappen. Dabei soll die geforderte Masshaltigkeit an der inneren und/oder äusseren, in jedem Fall aber glatten Glasrohroberfläche erreichbar sein.

Die schnelle und dynamische Entwicklung in der Lasertechnik verlangt unter anderem auch spezielle, doppelwandige Gasentladungsröhren hoher Winkelselektivität mit sehr vielen, quer zur Längsachse des Innenrohres verlaufenden, scharfkantigen Sicken oder Rippen in der Innenwand des Innenrohres. Derartige Röhren sind mit herkömmlichen Verfahren in der erforderlichen Qualität und Genauigkeit nur mit einem unvertretbar hohen Aufwand herstellbar, so dass die Entwicklung der Lasertechnik in diesem Bereich teilweise beträchtlich gehemmt wird.

Es ist Ziel der Erfindung, ein Verfahren zur Herstellung eines transversal gesickten oder gerippten Innenrohres einer doppelwandigen Spezialgasentladungsröhre hoher Winkelselektivität nebst zugehöriger Einrichtung zu entwickeln, das die wirtschaftliche Fertigung derartiger Rohre aus silikatischen Werkstoffen ermöglicht und damit eine wesentliche Voraussetzung für die Entwicklung neuartiger Lasersysteme mit beträchtlich erweiterten Applikationsmöglichkeiten schafft.

Der Erfindung liegt die Aufgabe zugrunde, ein Verfahren nebst zugehöriger Einrichtung zur Herstellung eines transversal gesickten oder gerippten Innenrohres einer doppelwandigen Spezialgasentladungsröhre hoher Winkelselektivität zu entwickeln, mit dem die Herstellung derartiger Rohre aus silikatischen Werkstoffen, vorzugsweise Rasothermglas oder Quarzglas, mit definierten scharfkantigen Sicken oder Rippen in der inneren Oberfläche des Innenrohres in der geforderten Genauigkeit und Qualität ermöglicht wird.

Gemäss der Erfindung wird diese Aufgabe mit einem Verfahren gelöst, bei dem das Innenrohr der doppelwandigen Spezialgasentladungsröhre hoher Winkelselektivität aus einer glatten, zylindrischen Röhre aus silikatischen Werkstoffen, bspw. Rasotherm- oder Quarzglas, geformt und mittels geeigneter Wärmequellen, bspw. Gasbrenner, soweit erwärmt wird, dass sich der Werkstoff plastisch verformen lässt.

Dazu werden die nachfolgend aufgeführten Arbeitsschritte durchgeführt:

– Vorbereitung der Umformung durch Einführung eines vorzugsweise aus mehreren Teilen montierten, mit einem Antihaftmittel besprühten inneren Umformwerkzeuges in die umzuformende, zunächst noch glatte Glasröhre, wobei im Aussenmantel des inneren Umformwerkzeuges die für das Innenrohr der speziellen Gasentladungsröhre geforderte Sickenform eingearbeitet und so bemessen ist, dass der Aussenmantel an der Innenwand der umzuformenden Glasröhre in sogenannter Spielpassung anliegt;

– Einspannen der umzuformenden Glasröhre mit dem eingeführten inneren Umformwerkzeug bspw. in eine Glasmacherdrehbank derart, dass das innere Umformwerkzeug feststeht und die umzuformende Glasröhre eine Drehbewegung um ihre Achse ausführt;

– Erwärmen der umzuformenden Glasröhre an einem Ende beginnend im Bereich der ersten, auszuformenden Sicken auf Transformationstemperatur;

– Ausformen mindestens der ersten beiden Sicken mit Hilfe eines parallel zur Drehachse der umzuformenden Glasröhre verschieb- und kippbar angeordneten, nicht angetriebenen äusseren Umformwerkzeuges mit kreisförmigem Querschnitt aus einem geeigneten Werkstoff, bspw. Graphit, dessen Aussenmantel mindestens zwei Sicken mit zum inneren Umformwerkzeug komplementärer Formgebung aufweist, indem das äussere Umformwerkzeug mässig so gegen die Wandung der umzuformenden Glasröhre gedrückt wird, dass es durch die dabei entstehende Haftreibung ebenfalls in Drehbewegung versetzt wird und in die entsprechenden Ausnehmungen des inneren Umformwerkzeuges eingreift;

– Umformung der gesamten Glasröhre in der Form, dass nach entsprechender Erwärmung des Röhrenmantels im jeweiligen Bereich der nächsten auszuformenden Sicke auf Transformationstemperatur das äussere Umformwerkzeug immer um jeweils eine Sicke in Arbeitsrichtung versetzt wird, so dass immer mindestens eine Sicke des äusseren Umformwerkzeuges bei der Ausformung der jeweils nächsten Sicke der umzuformenden Glasröhre in der im jeweils vorhergehenden Arbeitsgang ausgeformten Sicke geführt wird, wobei die umzuformende Glasröhre während der gesamten Bearbeitung in dem Bereich der bereits ausgeformten Sicken, in dem das innere Umformwerkzeug mindestens teilweise noch anliegt, auf einer nahezu konstant hohen Temperatur gehalten wird, die wenig unter der Transformationstemperatur des jeweils verwendeten Werkstoffes liegt und das innere Umformwerkzeug nach Beendigung der Umformung bei dieser Temperatur demontiert und aus dem Rohr entfernt wird, so dass das fertige Innenrohr der Spezialgasentladungsröhre in an sich bekannter Weise spannungsfrei abgekühlt werden kann.

Eine Einrichtung zur Durchführung des Verfahrens gemäss der Erfindung weist zwei simultan drehende Drehfutter zum Einspannen und Drehen der umzuformenden Glasröhre, zwei Zentrierspitzen zum Einspannen des inneren Umformwerkzeuges sowie geeignete Wärmequellen zur Erwärmung der umzuformenden Glasrohre auf Transformationstemperatur auf. Das innere Umformwerkzeug hat einen kreisförmigen Querschnitt mit seitlich sekantenförmig ausgebildeten, senkrecht verlaufenden Abflachungen, deren seitlicher Abstand zur Wandung der umzuformenden Glasröhre in Achshöhe etwa $1/3$ des Röhrenradius' beträgt. Zur Montage und Demontage besteht das innere Umformwerkzeug aus mindestens drei durch geeignete lösbare Verbindungen, bspw. Schraubverbindungen, miteinander verbundenen Längsteilen, einem Mittelteil mit rechteckigem oder quadratischem Querschnitt sowie einem Ober- und Unterteil, in deren verbliebene, kreisrunde Aussenmäntel die für das Innenrohr der speziellen Gasentladungsröhre geforderte Sickenform eingearbeitet ist. Dabei wird das innere Umformwerkzeug im montierten Zustand zur Umformung über die gesamte Länge in die umzuformende Glasröhre eingebracht und mittels der Zentrierspitzen eingespannt, so dass es während der gesamten Bearbeitung feststeht und mit seinen gesickten Aussenmänteln in sogenannter Spielpassung oberhalb und unterhalb der Röhrenachse symmetrisch an den zugehörigen Kreissegmenten der Innenwand der umzuformenden Glasröhre anliegt. Nach Beendigung des Umformprozesses gemäss der Erfindung werden die Schraubverbindungen gelöst, zunächst das Mittelteil herausgezogen und danach Ober- und Unterteil so weit abgesenkt bzw. angehoben, bis sie in Achsrichtung gesehen von den ausgeformten Sicken des nunmehr fertigen Innenrohres freigegeben und ebenfalls herausgezogen werden können.

Das äussere Umformwerkzeug zur Durchführung des Verfahrens gemäss der Erfindung, das drehbar gelagert und nicht angetrieben ist, hat einen kreisförmigen Querschnitt und sein Aussenmantel weist mindestens zwei Sicken mit zum inneren Umformwerkzeug komplementärer Formgebung auf. Es wird über eine geeignete Halterung so angeordnet, dass es über eine Schiebeachse parallel zur Achse der eingespannten, umzuformenden Glasröhre verschoben und über einen Andruckhebel manuell gegen den Aussenmantel der umzuformenden Glasröhre gedrückt werden kann.

Die andere Einrichtung zur Durchführung des Verfahrens gemäss der Erfindung weist ebenfalls zwei simultan drehende Drehfutter zum Einspannen und Drehen der umzuformenden Glasröhre, zwei Zentrierspitzen zum Einspannen des inneren Umformwerkzeuges sowie geeignete Wärmequellen zur Erwärmung der umzuformenden Glasröhre auf Transformationstemperatur auf.

Bei dieser Einrichtung ist auch die Verwendung eines während der Ausformung ebenfalls feststehenden, einteiligen inneren Umformwerkzeuges möglich. Dieses einteilige Umformwerkzeug ist dazu fest auf einer Welle, die ihrerseits mittels in Längsrichtung verschiebbarer, nicht rotierender Zentrierspitzen eingespannt wird, angeordnet und mit dieser parallel und gleichlaufend mit einem nicht angetriebenen, drehbar gelagerten äusseren Umformwerkzeug mit kreisförmigem Querschnitt verschiebbar. Das äussere Umformwerkzeug hat einen Aussenmantel, der mindestens zwei Sicken mit zum inneren Umformwerkzeug komplementärer Formgebung aufweist und wird über eine geeignete Halterung so angeordnet, dass es über eine Schiebeachse parallel zur Achse der eingespannten umzuformenden Glasröhre verschoben und über einen Andruckhebel manuell gegen den Aussenmantel der umzuformenden Glasröhre gedrückt werden kann.

Im Aussenmantel des einteiligen inneren Umformwerkzeuges sind mindestens zwei Sicken in der für das Innenrohr der speziellen Gasentladungsröhre geforderten Sickenform so eingearbeitet, dass der Aussenmantel symmetrisch oberhalb der Röhrenachse an einem Kreissegment an der Innenwand der umzuformenden Glasröhre in einem Bereich anliegt, der etwa ihrem Radius entspricht. Bei der Durchführung des Verfahrens gemäss der Erfindung wird das einteilige innere Umformwerkzeug ebenfalls in die umzuformende Glasröhre eingebracht und mittels der angeführten Spannelemente festgespannt, wobei die Welle mit dem einteiligen inneren Umformwerkzeug um einen Betrag abgesenkt werden kann, der etwas grösser ist, als die Tiefe der auszuformenden Sicken und wobei nach Ausformung der ersten beiden Sicken in der bereits beschriebenen Form die Welle mit dem einteiligen inneren Umformwerkzeug um den genannten Betrag abgesenkt, wie das äussere Umformwerkzeug um den Betrag einer Sicke in Arbeitsrichtung verschoben und wieder angehoben wird, so dass auch immer mindestens eine Sicke des einteiligen inneren Umformwerkzeuges bei der Ausformung der jeweils nächsten Sicke in die im jeweils vorhergehenden Arbeitsgang ausgeformte Sicke eingreift.

Die Erfindung soll nachstehend an einem Ausführungsbeispiel näher erläutert werden.

In den zugehörigen Zeichnungen zeigen:

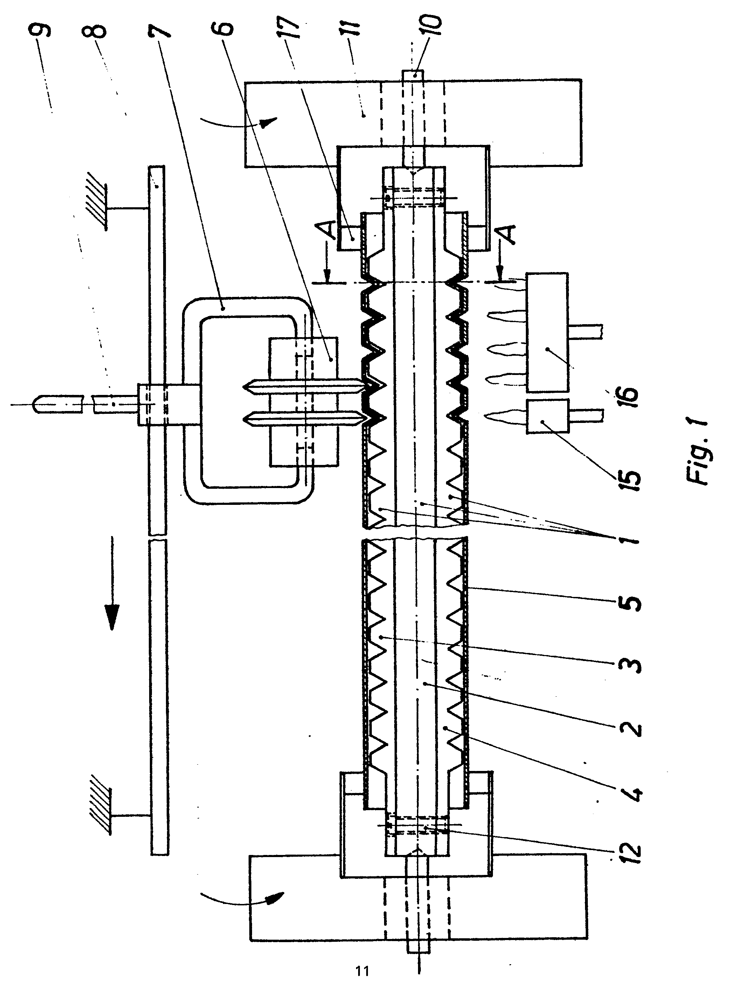

Fig. 1: Vorderansicht de Einrichtung zur Durchführung des Verfahrens gemäss der Erfindung;

Fig. 2: einen Schnitt durch das 3-teilige innere Umformwerkzeug mit umzuformendem Glasrohr;

Fig. 3: Vorderansicht des einteiligen inneren Umformwerkzeuges mit umzuformendem Glasrohr;

Fig. 4: einen Schnitt durch das einteilige innere Umformwerkzeug mit umzuformendem Glasrohr.

Die Einrichtung zur Durchführung des Verfahrens gemäss der Erfindung besteht aus zwei simultan drehenden Drehfuttern 11 zum Einspannen und Drehen der umzuformenden Glasröhre 5, aus Zentrierspitzen 10 zum festen Einspannen des inneren Umformwerkzeuges 1 sowie zugehörigen Wärmequellen, einem 1. Gasbrenner 15 und einem Mehrflammen-Kastenbrenner 16 zur Erwärmung der umzuformenden Glasröhre 5 auf die jeweils geforderte Arbeitstemperatur. Das umzuformende Rohr 5 aus Rasothermglas wird an beiden Enden mit Hilfe von geeigneten Klemmstücken 17 in die zwei simultan drehenden Drehfutter 11 bspw. einer Glasmacherdrehbank eingespannt. Das innere Umformwerkzeug 1, das aus einer speziellen Stahllegierung besteht, ist mit einem Antihaftmittel eingesprüht und befindet sich im Inneren der umzuformenden Glasröhre 5. Dieses innere Umformwerkzeug 1 ist zwischen zentrierten, nicht rotierenden Spitzen 10, die sich im Zentrum der beiden Drehfutter 11 befinden, fest eingespannt. Es weist an seiner an der Innenwand der umzuformenden Glasröhre 5 anliegenden Mantelfläche die für das Innenrohr 5 der speziellen Gasentladungsröhre geforderte Sickenform auf. Das äussere Umformwerkzeug 6 aus Graphit ist parallel zur Drehachse des umzuformenden Rohres 5 verschiebbar und kippbar so angeordnet, dass es mit mässiger Andruckskraft am Umfang des umzuformenden Rohres 5 angedrückt werden kann und infolge der dabei auftretenden Haftreibung eine zwangsläufige Drehbewegung um seine Drehachse ausführt. Sein Aussenmantel weist zwei Sicken mit zum inneren Umformwerkzeug 1 komplementärer Formgebung auf. Zur Umformung wird die sich langsam drehende Glasröhre 5 mit Hilfe des ersten Gasbrenners 15 auf eine solch hohe Temperatur gebracht, dass es sich plastisch verformen lässt. Mit Erreichen der erforderlichen Transformationstemperatur werden mit Hilfe des äusseren Umformwerkzeuges 6 durch Variation der Andruckskraft die ersten beiden Sicken am Rohrumfang ausgeformt. Nach Fertigstellung dieser ersten beiden Sicken wird das äussere Umformwerkzeug 6 aus den Sicken herausgehoben und in Arbeitsrichtung um den Betrag einer Sicke weitergeschoben. Mit Hilfe des mehrflammigen Kastenbrenners 16 werden sowohl die erste eingeformte Sicke, als auch das innere Umformwerkzeug im Bereich dieser ersten Sicke auf einer festgelegt hohen Temperatur gehalten, die wenig unterhalb des Transformationsbereiches des Rasothermglases liegt. Im Bereich der nächsten (dritten) Sicke wird das Rasothermglas mit Hilfe des ersten Gasbrenners 15 wiederum so weit erwärmt, dass es sich plastisch verformen lässt. Mit Hilfe des äusseren Umformwerkzeuges 6 wird die nächste Sicke in der bereits beschriebenen Form ausgeformt, wobei die in Arbeitsrichtung gesehen hintere Sicke des äusseren Umformwerkzeuges 6 in die im vorhergehenden Arbeitsgang ausgeformte zweite Sicke eingreift und in ihr geführt wird. Die Herstellung der vierten und aller folgenden Sicken erfolgt analog. Dabei wird die umzuformende Glasröhre 5 während des gesamten Bearbeitungsprozesses und auch das innere Umformwerkzeug 1 in dem Bereich der bereits ausgeformten Sicken auf der bereits angegebenen Temperatur unterhalb des Transformationsbereiches des Rasothermglases gehalten. Nach Beendigung der Umformung wird das innere Umformwerkzeug 1 demontiert und aus der Glasröhre entfernt, so dass das fertig ausgeformte Innenrohr 5 in bekannter Weise spannungsfrei abgekühlt werden kann.

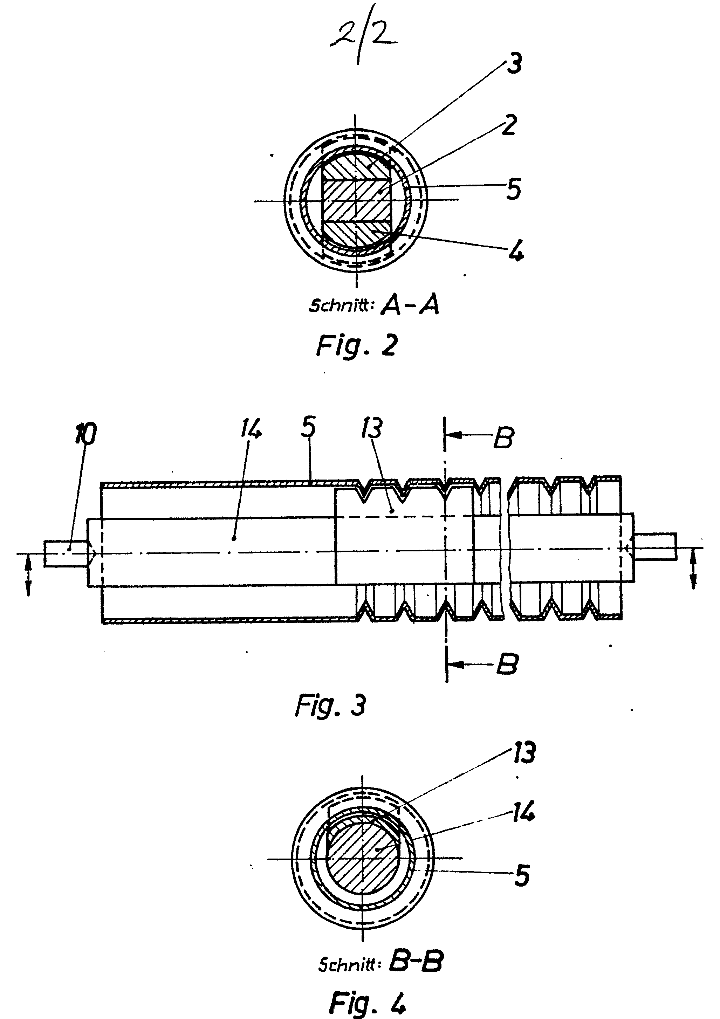

Das innere Umformwerkzeug 1 wird gemäss der Darstellung in Fig. 2 aus drei durch eine Schraubverbindung 12 miteinander verbundenen Längsteilen gebildet. Einem Mittelteil 2 mit rechteckigem Querschnitt sowie je einem Ober- und Unterteil 3; 4, in deren kreisrunde Aussenmäntel die für das Innenrohr 5 der speziellen Gasentladungsröhre geforderte Sickenform eingearbeitet ist. Im montierten Zustand weist das innere Umformwerkzeug 1 einen kreisförmigen Querschnitt auf, dessen Seiten sekantenförmig senkrecht abgeflacht sind, wobei der seitliche Abstand der Abflachungen zur Wandung der umzuformenden Glasröhre 5 in Achshöhe etwa 1/3 des Röhrenradius beträgt. Zur Umformung wird das innere Umformwerkzeug 1 über die gesamte Länge in die umzuformende Glasröhre 5 eingebracht und mittels nicht rotierender Zentrierspitzen 10 so eingespannt, dass es mit seinen gesickten Aussenmänteln in sogenannter Spielpassung ober- und unterhalb der Röhrenachse symmetrisch an den zugehörigen Kreissegmenten der Innenwand der umzuformenden Glasröhre 5 anliegt. Nach Beendigung des Umformprozesses werden die Schraubverbindungen 12 gelöst, zunächst das Mittelteil 2 herausgezogen und danach Ober- und Unterteil 3; 4 soweit abgesenkt bzw. angehoben, bis sie in Achsrichtung gesehen von den ausgeformten Sicken des fertigen Rohres freigegeben werden und ebenfalls entfernt werden können.

Das einteilige innere Umformwerkzeug 13 ist fest auf einer Welle 14 angeordnet, die ihrerseits mittels in Längsrichtung verschiebbarer, nicht rotierender, absenkbarer Zentrierspitzen 10 festgespannt wird. Dabei kann die Welle 14 mit dem einteiligen inneren Umformwerkzeug 13 mittels der Zentrierspitzen 10 um einen Betrag abgesenkt werden, der etwas grösser ist, als die Tiefe der auszuformenden Sicken. Im Aussenmantel des einteiligen inneren Umformwerkzeuges 13 ist die für das Innenrohr 5 der speziellen Gasentladungsröhre geforderte Sickenform eingearbeitet. Bei der Umformung der Glasröhre 5 nach dem erfindungsgemässen Verfahren wird das einteilige innere Umformwerkzeug 13 so in die Glasröhre 5 eingebracht, dass ihr Aussenmantel symmetrisch oberhalb der Röhrenachse an einem Kreissegment an der Innenwand der umzuformenden Glasröhre 5 in einem Bereich anliegt, der etwa ihrem Radius entspricht. Nach dem Ausformen der Sicken in der bereits weiter oben beschriebenen Form wird die Welle 14 mit dem einteiligen inneren Umformwerkzeug 13 um den genannten Betrag abgesenkt, gleichlaufend mit dem äusseren Umformwerkzeug 6 um den Betrag einer Sicke in Arbeitsrichtung verschoben und wieder angehoben, so dass auch immer die in Arbeitsrichtung gesehen hintere Sicke des einteiligen Umformwerkzeuges 13 bei der Ausformung der jeweils nächsten Sicke in die im jeweils vorhergehenden Arbeitsgang ausgeformte Sicke eingreift.

**Patentansprüche**

1. Verfahren zur Herstellung eines transversal gesickten oder gerippten inneren Rohres einer doppelwandigen Spezialgasentladungsröhre hoher Winkelselektivität, vorzugsweise für $CO_2$-Laser mit axialer Gasentladung hoher Verstärkung, aus einer glatten, zylindrischen Röhre (5) aus silikatischen Werkstoffen, bspw. Rasotherm- oder Quarzglas, bei dem der verwendete silikatische Werkstoff in bekannter Weise mittels geeigneter Wärmequellen, bspw. Gasbrenner, soweit erwärmt wird, dass er plastisch verformt werden kann, welches Verfahren die nachfolgend aufgeführten Arbeitsschritte umfasst:

— Vorbereitung der Umformung durch Einführung eines vorzugsweise aus mehreren Teilen montierten, mit einem Antihaftmittel besprühten inneren Umformwerkzeuges (1) in die umzuformende, zunächst noch glatte Glasröhre (5), wobei im Aussenmantel des inneren Umformwerkzeuges (1) die für das Innenrohr (5) der speziellen Gasentladungsröhre geforderte Sickenform eingearbeitet und so bemessen ist, dass der Aussenmantel an der Innenwand der umzuformenden Glasröhre (5) in sogenannter Spielpassung anliegt;

— Einspannen der umzuformenden Glasröhre (5) mit dem eingeführten inneren Umformwerkzeug (1) bspw. in eine Glasmacherdrehbank derart, dass das innere Umformwerkzeug (1) feststeht und die umzuformende Glasröhre (5) eine Drehbewegung um ihre Achse ausführt;

— Erwärmen der umzuformenden Glasröhre (5) an einem Ende beginnend im Bereich der ersten, auszuformenden Sicken auf Transformationstemperatur;

— Ausformen mindestens der ersten beiden Sicken mit Hilfe eines parallel zur Drehachse der umzuformenden Glasröhre (5) verschieb- und kippbar angeordnet, nicht angetriebenen äusseren Umformwerkzeuges (6) mit kreisförmigem Querschnitt aus einem geeigneten Werkstoff, bspw.

Graphit, dessen Aussenmantel mindestens zwei Sicken mit zum inneren Umformwerkzeug (1) komplementärer Formgebung aufweist, indem das äussere Umformwerkzeug mässig so gegen die Wandung der umzuformenden Glasröhre gedrückt wird, dass es durch die dabei entstehende Haftreibung ebenfalls in Drehbewegung versetzt wird und in die entsprechenden Ausnehmungen des inneren Umformwerkzeuges eingreift;

— Umformung der gesamten Glasröhre (5) in der Form, dass nach entsprechender Erwärmung des Röhrenmantels im jeweiligen Bereich der nächsten auszuformenden Sicke auf Transformationstemperatur das äussere Umformwerkzeug (6) immer um jeweils eine Sicke in Arbeitsrichtung versetzt wird, so dass immer mindestens eine Sicke des äusseren Umformwerkzeuges (6) bei der Ausformung der jeweils nächsten Sicke der umzuformenden Glasröhre (5) in der im jeweils vorhergehenden Arbeitsgang ausgeformten Sicke geführt wird, wobei die umzuformende Glasröhre (5) während der gesamten Bearbeitung in dem Bereich der bereits ausgeformten Sicken, in dem das innere Umformwerkzeug (1) mindestens teilweise noch anliegt, auf einer nahezu konstant hohen Temperatur gehalten wird, die wenig unter der Transformationstemperatur des jeweils verwendeten Werkstoffes liegt und das innere Umformwerkzeug (1) nach Beendigung der Umformung bei dieser Temperatur demontiert und aus dem Rohr (5) entfernt wird, so dass das fertige Innenrohr (5) der Spezialgasentladungsröhre in an sich bekannter Weise spannungsfrei abgekühlt werden kann.

2. Einrichtung zur Durchführung des Verfahrens nach Anspruch 1, mit zwei simultan drehenden Drehfuttern (11) zum Einspannen und Drehen der umzuformenden Glasröhre (5), Zentrierspitzen (10) zum festen Einspannen des inneren Umformwerkzeuges (1) sowie zugehörigen geeigneten Wärmequellen (15) zur Erwärmung der umzuformenden Glasröhre (5) auf Transformationstemperatur, welche Einrichtung enthält:

— ein inneres Umformwerkzeug (1) mit kreisförmigem Querschnitt mit seitlich sekantenförmig ausgebildeten Abflachungen, die senkrecht verlaufen und deren seitlicher Abstand zur Wandung der umzuformenden Glasröhre (5) in Achshöhe etwa $1/3$ des Röhrenradius beträgt, aus mindestens drei durch geeignete lösbare Verbindungen, bspw. Schraubverbindungen (12) miteinander verbundenen Längsteilen, einem Mittelteil (2) mit rechteckigem oder quadratischem Querschnitt und einem Ober- und Unterteil (3; 4), in deren verbliebene kreisrunde Aussenmäntel die für das Innenrohr (5) der speziellen Gasentladungsröhre geforderte Sickenform eingearbeitet ist, wobei das innere Umformwerkzeug (1) im montierten Zustand zur Umformung über die gesamte Länge in die umzuformende Glasröhre (5) eingebracht, mittels der Zentrierspitzen (10) eingespannt wird, so dass es während der gesamten Bearbeitung feststeht und mit seinen gesickten Aussenmänteln in sogenannter Spielpassung ober- und unterhalb der Röhrenachse symmetrisch an den zugehörigen Kreissegmenten der Innenwand der umzuformenden Glasröhre (5) anliegt und wobei nach Beendigung des Umformprozesses die Schraubverbindung (12) gelöst, zunächst das Mittelteil (2) herausgezogen und danach Ober- und Unterteil (3; 4) so weit abgesenkt bzw. angehoben werden, bis sie in Achsrichtung gesehen von den ausgeformten Sicken des fertigen Innenrohres (5) freigegeben und ebenfalls herausgezogen werden können, sowie

– einem nicht angetriebenen, drehbar gelagerten, äusseren Umformwerkzeug (6) mit kreisförmigem Querschnitt, dessen Aussenmantel mindestens zwei Sicken mit zum inneren Umformwerkzeug (1) komplementärer Formgebung aufweist und das über eine geeignete Halterung (7) so angeordnet wird, dass es über eine Schiebeachse (8) parallel zur Achse der eingespannten umzuformenden Glasröhre (5) verschoben und über einen Andruckhebel (9) manuell gegen den Aussenmantel der umzuformenden Glasröhre (5) gedrückt werden kann.

3. Einrichtung zur Durchführung des Verfahrens nach Anspruch 1, mit zwei simultan drehenden Drehfuttern (11) zum Einspannen und Drehen der umzuformenden Glasröhre (5), Zentrierspitzen (10) zum festen Einspannen des inneren Umformwerkzeuges (13) sowie zugehörigen geeigneten Wärmequellen zur Erwärmung der umzuformenden Glasröhre (5) auf Transformationstemperatur und mit einem während der Ausformung feststehenden, einteiligen inneren Umformwerkzeug (13), das fest auf einer Welle (14), die ihrerseits mittels in Längsrichtung verschiebbarer sowie absenkbarer, nicht rotierender Zentrierspitzen (nicht dargestellt) eingespannt wird, angeordnet ist und mit dieser Welle (14) parallel und gleichlaufend mit einem nicht angetriebenen, drehbar gelagerten äusseren Umformwerkzeug (6) mit kreisförmigem Querschnitt verschoben werden kann, welches äussere Umformwerkzeug über eine geeignete Halterung (7) so angeordnet wird, dass es über eine Schiebeachse (8) parallel zur Achse der eingespannten, umzuformenden Glasröhre (5) verschoben und über einen Andruckhebel (9) manuell gegen den Aussenmantel der umzuformenden Glasröhre (5) gedrückt werden kann und dessen Aussenmantel mindestens zwei Sicken mit zum inneren Umformwerkzeug (13) komplementärer Formgebung aufweist, während in den Aussenmantel des inneren Umformwerkzeuges (13) die für das Innenrohr (5) der speziellen Gasentladungsröhre geforderte Sickenform für ebenfalls mindestens zwei Sicken so eingearbeitet ist, dass der Aussenmantel symmetrisch oberhalb der Röhrenachse an einem Kreissegment an der Innenwand der umzuformenden Glasröhre (5) in einem Bereich, der etwa ihrem Radius entspricht, anliegt, wobei die Welle (14) mit dem einteiligen inneren Umformwerkzeug (13) mittels der längsverschieb- und absenkbaren Zentrierspitzen (18) um einen Betrag abgesenkt werden kann, der etwas grösser ist, als die Tiefe der auszuformenden Sicken und wobei nach Ausformung der ersten Sicken in der bereits beschriebenen Form die Welle (14) mit dem einteiligen inneren Umformwerkzeug (13) um den genannten Betrag abgesenkt, wie das äussere Umformwerkzeug (6) um den Betrag einer Sicke in Arbeitsrichtung verschoben und wieder angehoben wird, so dass auch immer mindestens eine Sicke des einteiligen inneren Umformwerkzeuges (13) bei der Ausformung der jeweils nächsten Sicke in die im jeweils vorhergehenden Arbeitsgang ausgeformte Sicke der umzuformenden Glasröhre (5) eingreift.

**Revendications**

1. Procédé pour la fabrication de rainures dans le sens transversal du tube intérieur d'un tube spécial à décharge à gaz avec grande sélectivité d'angle, de préférence pour le laser à $CO_2$ à décharge axiale de grande amplification, tube intérieur constitué d'un tube lisse cylindrique (5) en un matériau silicieux, par exemple en verre rasotherme ou verre quartzeux, dans lequel le matériau silicieux utilisé est chauffé d'une manière bien connue à l'aide de sources de chaleur appropriées, tels que brûleurs à gaz, jusqu'à ce qu'il puisse être déformé plastiquement, procédé qui comprend les phases opérationnelles mentionnées dans ce qui suit:

– Préparer la déformation en introduisant un outil de formage intérieur (1) assemblé de préférence de plusieurs parties et enduit d'un agent anti-adhésif dans le tube de verre à déformer encore lisse (5), la forme de rainure requise pour le tube intérieur (5) du tube spécial à décharge à gaz étant pratiquée dans l'enveloppe extérieure de l'outil de formage intérieur (1) et étant dimensionnée de sorte que l'enveloppe extérieure s'applique dans un ajustement avec jeu contre la paroi intérieure du tube à déformer (5);

– Fixer le tube de verre à déformer (5) contenant l'outil de formage intérieur (1), par exemple dans un tour de verrier de manière à ce que l'outil de formage intérieur (1) soit fixe et que le tube de verre à déformer (5) tourne autour de son axe;

– Porter à la température de transformation du verre le tube de verre à déformer (5) en commençant à une extrémité dans la zone des premières à former;

– Former d'abord au moins les premières deux rainures au moyen d'un outil de formage extérieur (6) non entraîné à section circulaire en graphite ou un autre matériau approprié et disposé d'une manière coulissante et basculante parallèlement à l'axe de rotation du tube de verre à déformer (5), dont l'enveloppe extérieure possède au moins deux rainures qui ont une configuration complémentaire par rapport à celle de l'outil de formage intérieur (1), en pressant légèrement l'outil de formage extérieur contre la paroi du tube de verre à déformer de telle manière qu'il soit également entraîné dans un mouvement rotatif par l'effet du frottement par adhérence y produit et qu'il s'engage dans les évidements correspondants de l'outil de formage intérieur;

– Déformer le tube de verre entier (5) de sorte qu'après l'échauffement convenable à la température de transformation de l'enveloppe de tube dans la zone respective de la prochaine rainure à former, l'outil de formage extérieur (6) soit déplacé toujours d'une rainure en sens de travail, de manière que toujours une rainure au moins de l'outil de formage extérieur (6) soit guidée dans la rainure formée au cours de l'opération précédente pendant le formage de la rainure suivante du tube de verre à déformer (5) procédé, dans lequel le tube à déformer (5) est maintenu à une température élevée sensiblement constante pendant tout le traitement dans la zone des rainures déjà formées où l'outil de formage intérieur (1) s'applique encore partiellement au moins, température qui est peu au-dessous de la température de transformation du matériau utilisé, et dans lequel l'outil de formage intérieur (1) est démonté après la fin de la déformation opérée à cette température et est sorti du tube (5) de sorte que le tube intérieur fini (5) du tube spécial à décharge à gaz puisse être refroidi sans tensions de la manière connue en soi.

2. Appareil pour la mise en œuvre du procédé selon la revendication 1, équipé de deux mandrins de tournage (11) tournant simultanément pour serrer et tourner le tube de verre à déformer (5), de pointes de centrage (10) pour fixer solidement l'outil de formage intérieur (1) ainsi que de sources de chaleur appropriées y appartenant (15) qui portent le tube de verre à déformer (5) à la température de transformation, lequel appareil comprend:

– un outil de formage intérieur (1) à section circulaire pourvue d'aplatissements latéraux en forme de sécante dont la direction est verticale et dont la distance latérale de la paroi du tube de verre à déformer (5) s'élève au niveau de l'axe à environ un tiers du rayon du tube, outil constitué au moins de trois parties longitudinales reliées entre elles par des assemblages amovibles appropriés, par exemple des assemblages à vis (12), d'une partie médiane (2) à section rectangulaire ou carrée et d'une partie supérieure et d'une partie inférieure (3; 4), dans les enveloppes extérieures circulaires restantes desquelles est pratiqué la forme de rainure requise pour le tube intérieur (5) du tube spécial à décharge à gaz, l'outil de formage intérieur (1) étant introduit en état monté en vue de la déformation sur toute la longueur dans le tube de verre à déformer (5) et étant serrée au moyen des pointes de centrage (10) de sorte qu'il soit fixe pendant toute l'opération de formage et s'applique par ses enveloppes extérieures rainurées en ajustement avec jeu au-dessus et au-dessous de l'axe du tube d'une manière symétrique contre les segments de cercle de la paroi intérieure du tube de verre à déformer (5), et l'assemblage à vis (12) étant desserré après la fin de l'opération de déformation, d'abord la partie médiane (2) étant sortie et ensuite la partie supérieure et la partie inférieure (3; 4) étant abaissées ou soulevées jusqu'à ce qu'elles soient lâchées – vues en direction axiale – par les rainures formées du tube intérieur fini (5) et qu'elles puissent être sorties de leur tour, ainsi que

– un outil de formage extérieur (6) non entraîné et pivotant et à section circulaire, dont l'enveloppe extérieure présente au moins deux rainures d'une configuration complémentaire par rapport à celle de l'outil de formage intérieur (1) et qui est disposé par l'intermédiaire d'un support approprié de manière à ce qu'il puisse être déplacé à l'aide d'un axe coulissant (8) parallèlement à l'axe du tube de verre à déformer serré (5) et qu'il puisse être pressé à la main au moyen d'un levier de pression (9) contre l'enveloppe extérieure du tube de verre à déformer (5).

3. Appareil pour la mise en œuvre du procédé selon la revendication 1, équipé de deux mandrins de tournage tournant simultanément (11) pour serrer et tourner le tube de verre à déformer, de pointes de centrage (10) pour la fixation solide de l'outil de formage intérieur (13) ainsi que de sources de chaleur appropriées y appartenant qui portent le tube de verre à déformer (5) à la température de transformation, et d'un outil de formage intérieur indivisé et fixe pendant le façonnage (13) qui est disposé d'une manière immobile sur un arbre (14), qui de son tour est serré au moyen de pointes de centrage (non représentées) déplaçables en sens longitudinal et vers le bas et non rotatives, outil de formage intérieur qui peut être déplacé avec cet arbre (14) parallèlement et d'une manière synchrone avec un outil de formage extérieur (6) non entraîné et pivotant à section circulaire, lequel est disposé au moyen d'un support approprié (7) de manière à ce qu'il puisse être déplacé par l'intermédiaire d'un axe coulissant (8) parallèlement à l'axe du tube à déformer serré (5) et qu'il puisse être pressé à la main par un levier de pression (9) contre l'enveloppe extérieure du tube de verre à déformer (5), et dont l'enveloppe extérieure possède au moins deux rainures d'une configuration complémentaire par rapport à celle de l'outil de formage intérieur (13), tandis que la forme de rainure nécessaire au tube intérieur (5) du tube spécial à décharge à gaz est pratiquée pour au moins deux rainures dans l'enveloppe extérieure de l'outil de formage intérieur (13) de sorte que l'enveloppe extérieure s'applique symétriquement au-dessus de l'axe de tube contre un segment de cercle à la paroi intérieure du tube de verre à déformer (5) sur une longueur sensiblement égale à son rayon, l'arbre (14) supportant l'outil de formage intérieur indivisé (13) pouvant être abaissé au moyen des pointes de centrage déplaçables en sens longitudinal et vers le bas sur un trajet légèrement supérieur à la profondeur des rainures à former et, après le formage des premières rainures de la manière décrite, l'arbre (14) avec l'outil de formage intérieur indivisé (13) étant abaissé de la distance sus-mentionnée et l'outil de formage extérieur (6) étant déplacé et relevé d'une manière synchrone de la largeur d'une rainure en sens de travail de manière à ce que toujours au moins une rainure de l'outil de formage intérieur indivisé (13) s'engage lors du formage de la rainure suivante dans la rainure formée pendant l'opération précédente du tube de verre à déformer (5).

**Claims**

1. A method for making radial grooves in the inner tube of a special gas discharge tube having a high angle selectivity, preferably for $CO_2$ lasers with axial gas discharge of high amplification, of a smooth, cylindrical tube (5) consisting of siliceoux materials such as pyrex or quartz glass, wherein the siliceous material used is heated in a known manner by means of suitable heat sources such as gas burners until plastic deformation is possible, the method comprising the following steps:

– preparing reforming by introducing an inner reforming tool (1) sprayed with an antisticking agent and preferably consisting of several parts mounted together into the still smooth glass tube (5) to be reformed, the outer shell of the inner reforming tool (1) being provided with the groove form which is required for the inner tube (5) of the special gas discharge tube and is dimensioned so that outer shell bears on the inner wall of the glass tube (5) to be reformed in a so-called clearance fit;

– mounting the glass tube (5) with the introduced inner reforming tool (1), for example, onto a glassmaker's bench in such a manner that the inner reforming tool (1) is stationary and the glass tube (5) to be reformed rotates about its axis;

– heating the glass tube (5) to be reformed to the transformation temperature starting at one end within the region of the first grooves to be formed;

– forming at least the first two grooves by means of a non-driven outer reforming tool (6) having a circular cross section and being made of a suitabel material such as graphite which is arranged to be tiltable and movable parallel to the rotation axis of the glass tube (5) to be reformed and whose outer shell is provided with at least two ridges of a shape complementary to the grooves of the inner reforming tool (1) by moderately pressing the outer reforming tool against the wall of the glass tube to be reformed so that it is caused by the resulting static friction to rotate as well, coming into engagement with the corresponding recesses in the inner reforming tool;

– reforming the whole glass tube (5) in such a manner that, after correspondingly heating the tube shell within the respective region of the next groove to be formed to the transformation temperature, the outer reforming tool (6) is moved in the working direction for one groove each so that when forming the next groove each of the glass tube (5) to be reformed, in each case,at least one ridge of the outer reforming tool is guided in the groove formed during the preceding operation, the glass tube (5) to be reformed being kept within the region of the grooves already formed, where the inner reforming tool (1) is, at least in part, still bearing on, during the complete working process at a nearly constantly high temperature, which is slightly below the transformation temperature of the material used in each case, and the inner reforming tool (1) being dismounted at this temperature after the completion of reforming and removed from tube (5) so that the finished inner tube (5) of the special gas discharge tube can stress-freely be cooled in a manner known per se.

2. An apparatus for carrying out the method according to claim 1, including two simultaneously rotating chucks (11), for mounting and rotating the glass tube (5) to be reformed, centres (10)for fixedly mounting the inner reforming tool (1) as well as associated suitable heat sources (15) for heating the glass tube (5) to be reformed to the transformation temperature, the apparatus comprising:

– an inner reforming tool (1) of circular cross-section with lateral secant-type flattenings, which proceed perpendicularly and whose lateral distance from the wall of the glass tube (5) to be reformed is at the height of centre, about one third of the tube radius, consisting of at laest three longitudinal parts connected to each other by suitable nonpermanent connections such as threaded connections (12), a central part (2) of rectangular or square cross section and upper and lower parts (3; 4) whose remaining circular outer shells have been provided with the groove form required for the inner tube (5) of the special gas discharge tube, the inner reforming tool (1) being introduced into the glass tube (5) to be reformed in the mounted state for reforming over the whole length and held by means of the centres (10) so that it is stationary during the whole working process and with its grooved outer shells bears on the respective circular segments of the inner wall of the glass tube (5) to be reformed in a so-called clearance fit symmetrically above and below the tube axis, and, after the completion of reforming, the threaded connections (12) being loosened, at first the central part (2) being withdrawn and then the upper and lower parts (3; 4) being lowered, or lifted until they are released, as viewed axially, from the formed grooves of the finished inner tube (5) and can also be withdrawn, as well as

– a non-driven, pivotally mounted outer reforming tool (6) of circular cross section whose outer shell is provided with at least two ridges of a shape complementary to the grooves of the inner reforming tool (1) and which is arranged by means of a suitable mount (7) so that it can be moved along a shifting axis (8) parallel to the axis of the mounted glass tube (5) to be reformed and manually pressed against the outer shell of the glass tube (5) to be reformed via a pressing lever (9).

3. An apparatus for carrying out the method according to claim 1, comprising two simultaneously rotating chucks (11) for mounting and rotating the glass tube (5) to be reformed, centres (10) for fixedly mounting the inner reforming tool (13) as well as associated suitable heat sources for heating the glass tube (5) to be reformed to the transformation temperature, and a single-part inner reforming tool (13) stationary during the forming process, which is fixedly arranged on a shaft (14) mounted by means of non-rotating centres (not shown) movable in the longitudinal direction as well as lowerable, and can be moved with this shaft (14) parallel to and in the same direction as a non-driven, pivotally mounted outer reforming tool (6) of circular cross section, this outer reforming tool being arranged by means of a suitable mount (7) so that it can be moved along a shifting axis (8) parallel to the axis of the mounted glass tube (5) to be reformed and manually pressed against the outer shell of the glass tube (5) to be reformed via a pressing lever (9) and its outer shell being provided with at least two ridges of a shape complementary to the grooves of the inner reforming tool (13), whereas the outer shell of the inner reforming tool (13) is also provided with the groove form required for the inner tube (5) of the special gas discharge tube for at least two grooves so that the outer shell bears on a circular segment of the inner wall of the glass tube (5) to be reformed symmetrically above the tube axis within a region which approximately corresponds to its radius, the shaft (14) being lowerable with the single-part inner reforming tool (13) by means of the longitudinally movable and lowerable centres (18) by an amount which is slightly larger than the depth of the grooves to be formed, and, after forming the first grooves in the manner already described, the shaft (14) being lowered with the single-part inner reforming tool (13) by the mentioned amount as the outer reforming tool (6) is moved in the working direction by the amount of one groove and lifted again so that when forming the next groove each, in each case at least one groove of the single-part inner reforming tool (13) engages the groove of the glass tube (5) to be reformed which was formed in the preceding operation each.

1/2

Fig. 1

Schnitt: A–A

Fig. 2

Fig. 3

Schnitt: B-B

Fig. 4

13